# EUROPÄISCHE PATENTSCHRIFT

(11) **EP 4 138 538 B1**
(45) Veröffentlichungstag und Bekanntmachung des Hinweises auf die Patenterteilung: **18.02.2026**
(21) Anmeldenummer: 21719131.1
(22) Anmeldetag: 16.04.2021
(51) Int. Cl.: A01D 34/416, A01D 34/84

(54) **FADENMÄHROTOR**
TRIMMER MOWER ROTOR
ROTOR DE TONDEUSE À FIL

(30) Priorität: 22.04.2020 IT 202000008581
(43) Veröffentlichungstag der Anmeldung: 01.03.2023
(73) Patentinhaber: Windegger Maschinen GmbH, 39011 Lana (IT)
(72) Erfinder: WINDEGGER, Martin, 39011 Lana (IT); WINDEGGER, Walter, 39011 Lana (IT)
(74) Vertreter: Ausserer, Anton
(86) Internationale Anmeldenummer: PCT/EP2021/059866
(87) Internationale Veröffentlichungsnummer: WO 2021/213904

(56) Entgegenhaltungen:
- EP-A1- 1 250 834
- EP-A1- 3 056 075
- WO-A1-2016/120140
- US-A1- 2005 076 515
- US-A1- 2019 364 727

## Beschreibung

Die vorliegende Erfindung bezieht sich auf einen Fadenmährotor gemäß dem Oberbegriff des Patentanspruchs 1.

### Technisches Gebiet

Das technische Gebiet sind die Fadenmährotore, die so genannten Fadenmotorsensenköpfe, die für das mechanische Mähen zwischen den Reihen in den Obstanlagen oder auf anderen Gebieten benutzt werden. Der Faden ist ein Verbrauchsmaterial, das für das Mähen benutzt wird.

### Stand der Technik

Aus EP 2092816 ist ein mit einer Fadenmotorsensenkopf bekannt, der mit einer Fadenträgerdrehwelle für eine Reihe von elastischen Fäden, die dazu neigen sich unter der Wirkung der Fliehkraft radial auszurichten und mit einer Schutzabdeckung versehen ist. Auf der Fadenträgerdrehwelle sind innerhalb eines drehbar gelagerten Rohres Fäden aufgewickelt oder axial sind auf derselben Weile durch die am genannten Rohr vorgesehenen Bohrungen oder Hülsen heraustretende Enden der genannten Fäden vorgesehen und die Drehung des Rohrs gegenüber der koaxialen Welle wird durch einen Freilaufmechanismus mit arretrierbarer oder umkehrbar Drehrichtung gesteuert.

Aus US 2005 076 515 ist ein tragbarer Motorsensenkopf bekannt, der einen verbesserten Spannmechanismus für den Faden besitzt, der für das Schneiden, die Bearbeitung von Gras und ähnlichem Verwendung wird. In dieser Veröffentlichung wird ein Gegenlaufmechanismus beschrieben, der den manuellen Auszug des Fadens falls erforderlich erlaubt.

Aus der Veröffentlichung WO 2014 083550 ist ein Modul bekannt, der eine Antriebswelle mit sechseckigem Querschnitt umfasst, die sich längs einer Längsachse erstreckt. Diese Vorrichtung weist eine Vielzahl von Modulen, die um die Welle herum angeordnet sind und miteinander in axialer Richtung gekoppelte, eine Vielzahl von Verankerungen, von denen jede innerhalb eines entsprechenden Motors der Weile gekoppelt angeordnet ist, und eine Vielzahl von Arbeitsfäden auf, von denen jeder mit einer entsprechenden Verankerung gekoppelt, innerhalb eines entsprechenden Motors aufgewickelt ist und zwei abgewandte Enden aufweist, die aus dem Modul hervorragen. Beim Gebrauch sind sie gegenseitig axial in Eingriff und drehen sich drehfest mit der Welle.

Aus der EP 3 138 376 ist ein Mährotor bekannt, der eine Rohrwelle aufweist, die sich längs der Längsachse erstreckt, angetrieben ist um, um die Längsachse herum sich zu drehen und einen zylindrischen Aufbau und ein austauschbares Schutzrohr, das um den zylindrischen Aufbau herum angeordnet und ausgestaltet ist, um am Boden zu gleiten, eine Vielzahl von Arbeitsfäden besitzt, von denen jeder innerhalb der Rohrwelle angeordnet und ausgestaltet ist, um zwei entsprechende Endabschnitte durch zwei entsprechende Öffnungen in der Zylinderwand außerhalb der Rohrwelle zu legen.

Aus der EP 3 056 075 ist ein die Fadenmährotor bekannt, im dem dort zitiertem Stand der Technik wird beschrieben dass das rotierende Elemente mit dem Gehäuse verbunden ist und in einer zweiten Position drehbar gegenüber dem Gehäuse ist um ein abrollen des Fadens zu ermöglichen.

Dies ist aber nur gedacht um das abrollen des Fadens zu ermöglichen in dieser Phase ist aber der Rotor nicht in Funktion, wie aus dem Absatz ersichtlich da beschrieben wird, dass der Faden der während der Benutzung verbraucht wird auf diese Weise wieder hergestellt wird. Daher ist ableitbar dass das abwickeln nicht während des Gebrauchs erfolgt.

Aus der WO2016 120140 ist ein Fadenmährotor bekannt wobei der Faden manuell ersetz wird ohne diesen zu öffnen. Auch bei diesem Rotor ist es Notwendig den Mähprozess zu unterbrechen um den Faden zu ersetzen.

All diese Vorrichtungen weisen ein wesentliches Problem auf, dass während der Bearbeitung der Auszug des Arbeitsfadens erforderlich ist. Dies bewirkt einen erheblichen Arbeitsaufwand.

### Kurze Beschreibung der Erfindung

In der vorliegenden Erfindung werden "im wesentlichen" Abweichungen von +-5% und/oder +- 5° verstanden.

Die Aufgabe der vorliegenden Erfindung ist die Ausführung eines Fadenmährotors, der eine kontinuierliche Zuführung des Fadens während des Betriebes des Motors aufweist.

Diese Aufgabe wird durch einen Fadenmährotor mit den Merkmalen des kennzeichnenden Teils des Patentanspruchs 1 und eine einen erfindungsgemäßen Rotor verwendende Maschine gelöst.

Vorgeschlagen wird ein durch eine Aufnahme gebildeter Fadenmährotor, auf dem mindestens ein Faden auf gewickelt ist, wobei die Aufnahme in einem Gehäuse aufgenommen ist, das mindestens zwei Öffnungen aufweist, durch die zwei Fadenabschnitte nach außen jeweils eines Fadenmährotors geführt werden. Gemäß der Erfindung drehen sich die Aufnahme und mindestens ein das Gehäuse bildendes Teil mit unterschiedlichen Geschwindigkeiten und bevorzugter Weise dreht sich die Aufnahme mit einer Geschwindigkeit größer als die Geschwindigkeit eines Teils des Gehäuses in einer zur Aufwickelrichtung des Fadens abgewandten Richtung auf der Aufnahme wobei beide Teile angetrieben werden.

Auf diese Art und Weise erfolgt eine kontinuierliche Abrollung. Vorteilhafter Weise dreht sich das Gehäuse mit 180.000 Umdrehungen in der Stunde und die Aufnahme dreht sich mit 180.000 Umdrehungen in der Stunde + 1 bis 10 Umdrehungen in der Stunde.

Auf diese Art und Weise wird der Faden mit von 1 bis 10 Umdrehungen in der Stunde abgerollt.

Vorteilhafter Weise werden die beiden Teile durch einen einzigen Antrieb, jedoch unter Zwischenschaltung eines Getriebes, angetrieben.

Vorteilhafter Weise dreht sich der Rotor um eine vertikale Achse gegenüber dem Gelände/der Arbeitsebene.

In einer weiteren Ausführungsform ist in einem vorgegebenen Abstand ein Schneidelement und/oder eine Vorrichtung mit einem Schneidelement angeordnet, das, wenn der Faden eine vorgegebene Länge übersteigt, diese vom Schneidelement abgeschnitten wird, wobei die Vorrichtung vorteilhafter Weise den Anteil des abgeschnittenen Fadens sammelt um eine Umweltbelastung zu vermeiden.

Vorteilhafter Weise kann die Fadenaufnahme ein austauschbares Element sein.

In einer bevorzugten Ausführungsform sind zwei Fäden auf der Aufnahme mit jeweils einem austretenden Ende durch die Öffnung im Gehäuse des Fadenmährotors aufgewickelt.

Der erfindungsgemäße Rotor wird bevorzugter Weise auf einer Maschine angeordnet, die zum Beispiel durch einen Traktor oder ähnlichen gezogen wird.

Diese Maschine umfasst bevorzugter Weise vier erfindungsgemäße Rotoren, die zu zweier Paaren seitlich angeordnet sind.

Weitere Merkmale und Einzelheiten der Erfindung gehen aus den Patentansprüchen und aus der folgenden Beschreibung einer bevorzugten, nicht begrenzenden, in den beigefügten Zeichnungen dargestellten Ausführungsform hervor. Es zeigen:
- Figur 1: eine Perspektive eines erfindungsgemäßen Geräts mit Rotoren in Ruhestellung,
- Figur 2: eine Perspektive eines Geräts mit Rotoren in Arbeitsteilung,

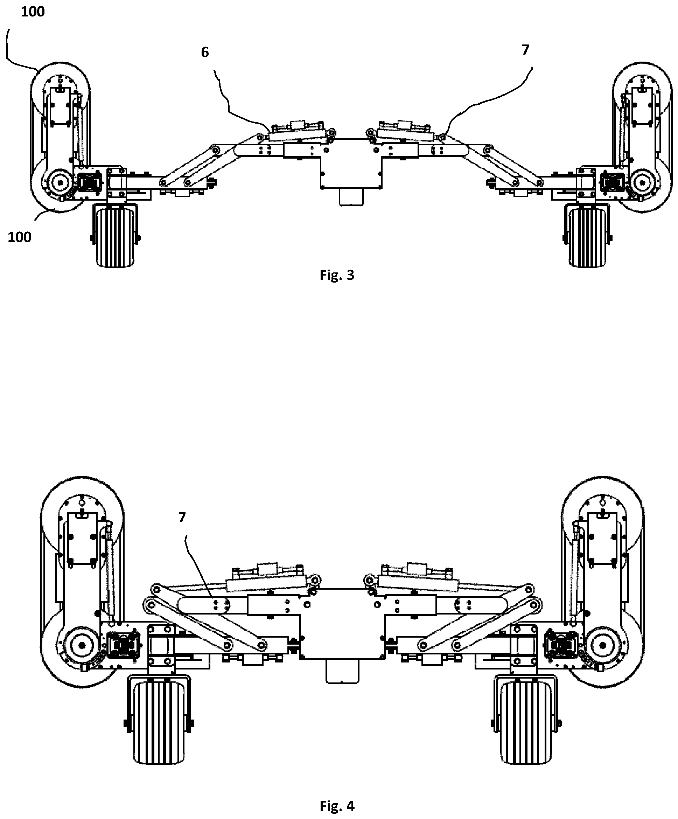

- Figur 3: einen Schnitt eines erfindungsgemäßen Geräts mit Rotoren in Ruhestellung,
- Figur 4: eine Schnitt eines erfindungsgemäßen Geräts mit Rotoren in Arbeitsteilung,

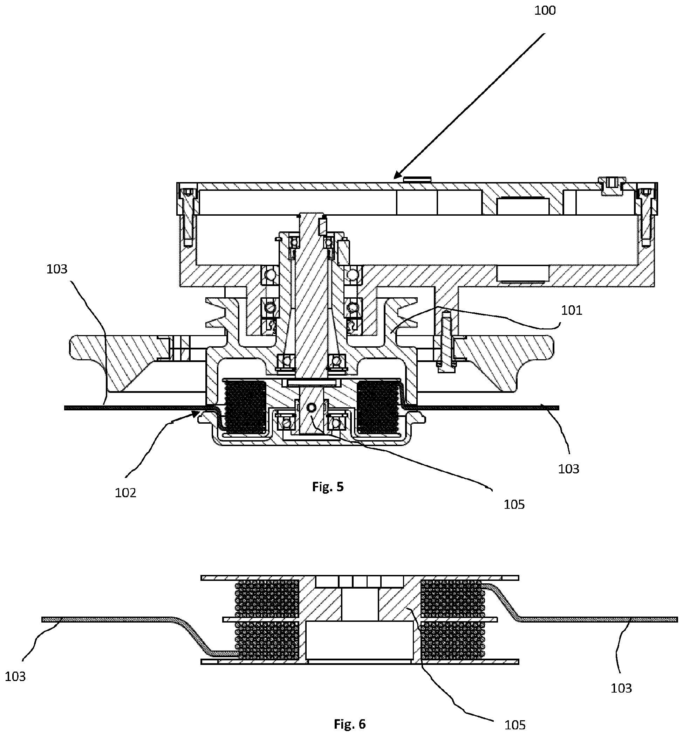

- Figur 5: einen Schnitt eines erfindungsgemäßen Rotors,
- Figur 6: einen Schnitt einer Fadenaufnahme für einen erfindungsgemäßen Rotor,
- Figur 7: eine Perspektive von zwei erfindungsgemäßen durch einen einzigen Antrieb angetriebenen Rotoren,
- Figur 8: eine Schnitt von zwei erfindungsgemäßen, durch einen einzigen Antrieb angetriebenen Rotoren in einer zweiten Ausführungsform,
- Figur 9: einen vertikalen Schnitt aus Figur 8,
- Figur 10: eine Perspektive aus Figur 8,

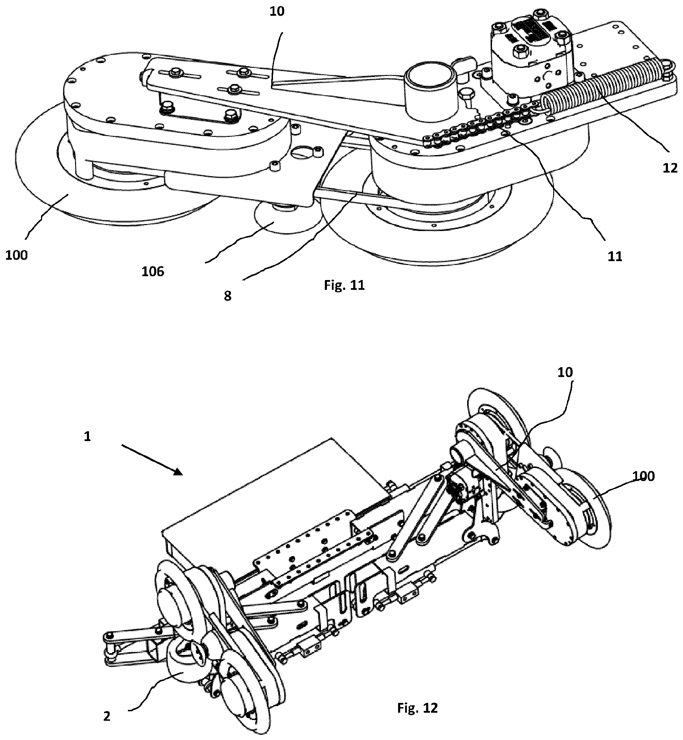

- Figur 11: eine Perspektive von oben aus Figur 8,
- Figur 12: eine Perspektive eines erfindungsgemäßen Geräts mit Rotoren in Ruhestellung in einer zweiten Ausführungsform,

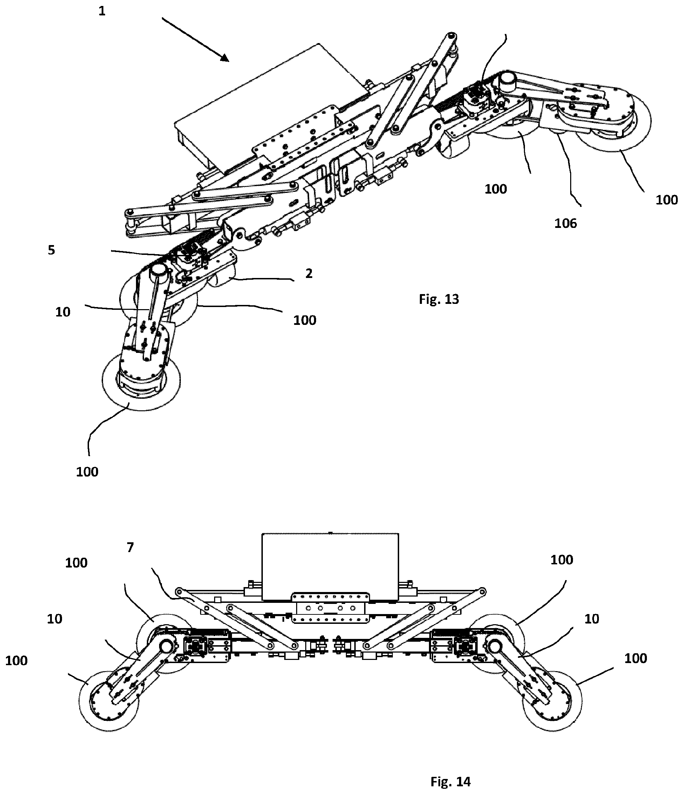

- Figur 13: eine Perspektive eines Geräts aus Figur 12 in ausgezogenen Form,
- Figur 14: eine Ansicht von oben eines Geräts aus Figur 12 in zurückgezogener Form,

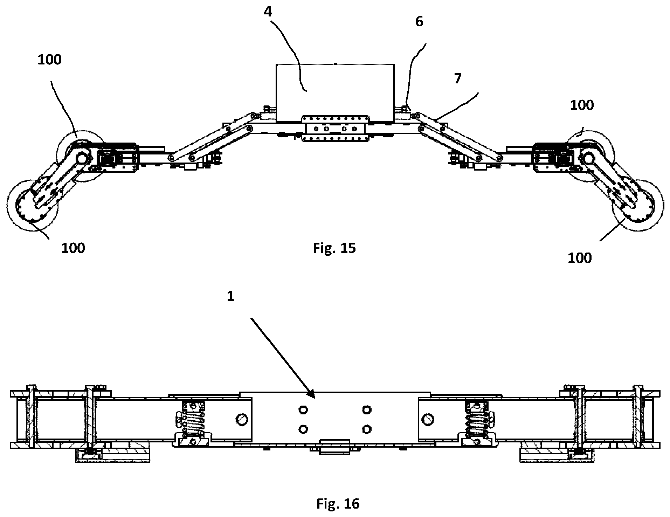

- Figur 15: eine Ansicht von oben einer Vorrichtung aus Figur 12 in ausgezogenen Form,
- Figur 16: eine Schnitt eines Geräts aus Figur 12,
- Figur 17: eine Seitenansicht eines erfindungsgemäßen Geräts, bei dem das Rad auf dem Gelände auffliegt, und
- Figur 18: eine Seitenansicht eines erfindungsgemäßen Geräts, bei dem das Rad teilweise zurückgezogen/geneigt ist.

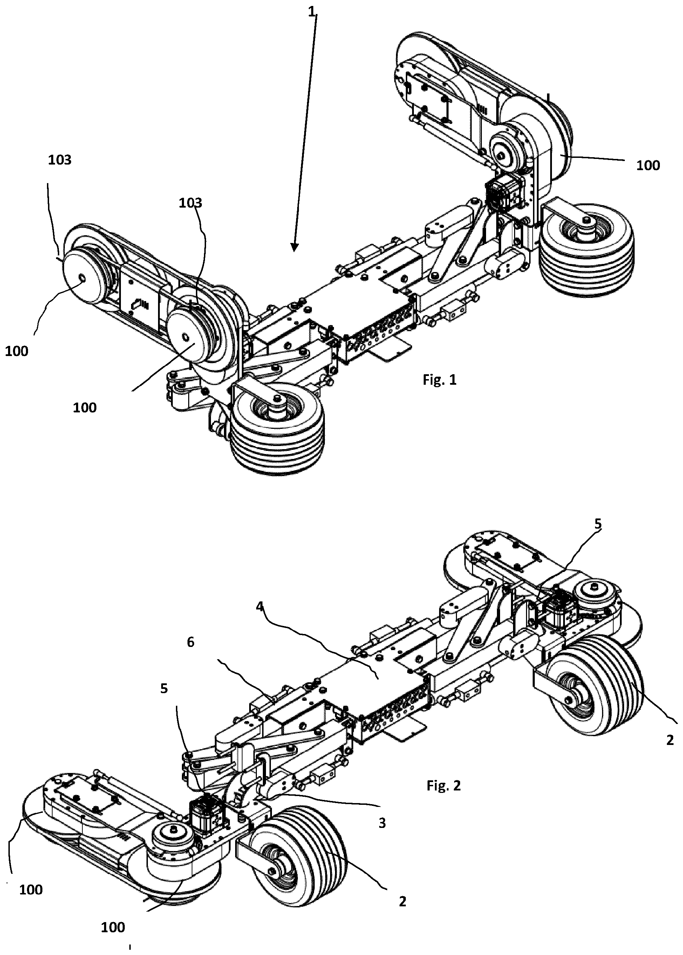

In Figur 1 wird mit der Bezugsziffer 1 ein Mähgerät angegeben, das einen Rahmen 4 aufweist, mit dem an zwei Seiten jeweils zwei erfindungsgemäße Mährotore 4 verbunden sind. Diese Rotore 100 werden seitlich durch einen Antrieb angetrieben. Vorteilhafter Weise ist der Antrieb 5 ein Elektromotor und/oder Hydromotor. Die beiden Rotore 100 sind vorteilhafter Weise mit dem Rahmen 4 des Geräts 1 durch eine Verbindungsstelle 3 verbunden, die eine Biegung und daher die Verkleinerung der Breite des Geräts 1 ermöglicht. Vorteilhafter Weise ist der zweite, äußerste Mährotor 100 gegenüber dem ersten Mährotor um eine im Wesentlichen zur Drehachse des Mährotors 100 parallelen Achse verschwenkbar. Bevorzugter Weise wird das Gerät 1 durch einen nicht gezeigten Traktor oder ähnlichen gezogen und auch die Antriebe 5 werden durch das Zugmittel versorgt. In einer weiteren Ausführungsform könnte das gesamte System auch durch ein hydraulisches Antriebssystem angetrieben werden. Vorteilhafter Weise umfasst das erfindungsgemäße Gerät 1, dieses tragende Räder 2. vorteilhafter Weise können auch diese Räder dazu verwendet werden um die Abmessung des Geräts 1 zu verkürzen. Vorteilhafter Weise weist der Rahmen 4 des Geräts 1 Gelenke 7 auf, die durch einen Kolbensystem 6 steuerbar sind um die Breite der Vorrichtung 1 zu vergrößern oder zu verkleinern. Dies ist besonders vorteilhaft, da auf diese Weise der Mähbereich in Abhängigkeit der wirklichen Situation eingestellt werden kann. Da oftmals der Abstand zwischen den Reihen sich zwischen den Bäumen je nach Zone und Gelände und der von Bäumen, Pflanzen oder anderen Anpflanzungen ändert, sind die Mährotoren 100 vorteilhafter Weise durch einen Riemen 103 miteinander verbunden, der beide Mährotoren seitlich antreibt und selbst vom Antrieb 5 angetrieben wird.

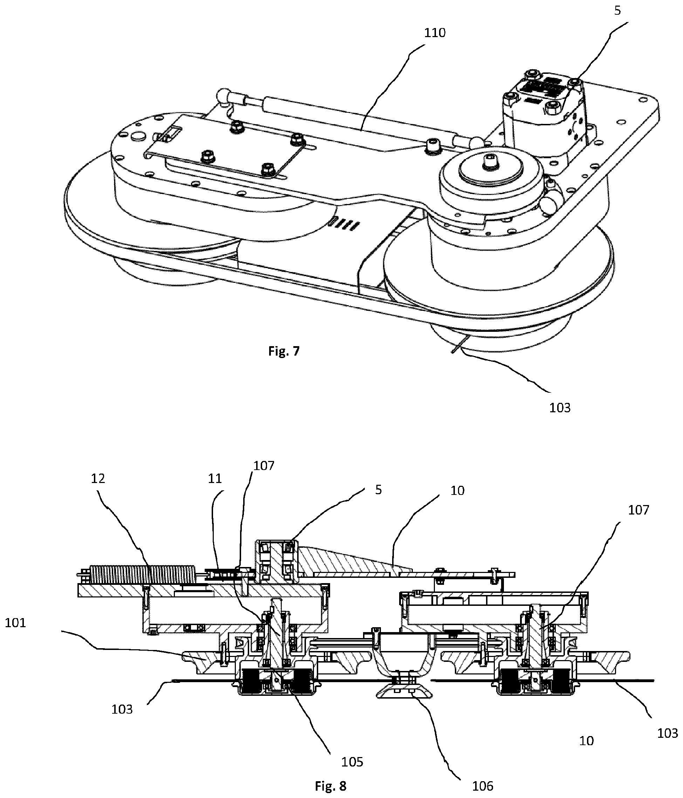

Der Mährotor 100 wird wie in Figur 7 erläutert, bevorzugter Weise paarweise mit einem weiteren Mährotor 100 auf einer Seite eines Geräts für das Mähen angebracht.

Der erfindungsgemäße Mährotor 100 kann jedoch auch in einer Ausführungsform einzeln von einer Person zum Beispiel auf der Schulter getragen und von einem Motor, zum Beispiel einem Verbrennungsmotor angetrieben werden.

Der Mährotor 100 umfasst eine Aufnahme 105, die in einem Gehäuse 101 aufgenommen ist. Auf dieser Aufnahme 105 ist/sind mindestens ein Faden 103, bevorzugter Weise mindestens zwei Fäden 103 übereinander liegend aufgewickelt. Die Aufnahme 105 ist gegenüber dem Gehäuse 101 drehbar. Das Gehäuse weist bevorzugter Weise einen kreisförmigen Querschnitt auf. Die Aufnahme 112 und das Gehäuse 101 sind gegenüber einer gemeinsamen Drehachse drehbar. Bevorzugter Weise ist diese Drehachse zum Gelände in Betriebsposition des Mährotors 100 senkrecht.

Dieses Gehäuse 101 weist Öffnungen 102, bevorzugter Weise mindestens zwei Öffnungen 102 auf, die vom Inneren des Gehäuses nach außen verlaufen. Über diese Öffnungen 102 werden jeweils Fadenabschnitte 103 nach außen geführt. Vorteilhafter Weise sind die beiden Öffnungen 102 auf gegenüberliegenden Seiten des Gehäuses 101 angeordnet.

Sobald der Mährotor 100 in Betrieb ist, besteht ein Geschwindigkeitsunterschied zwischen der Aufnahme 105 und dem Gehäuse 101. Bevorzugter Weise dreht sich das Gehäuse mit einer Geschwindigkeit die zur der Abwicklungsrichtung des Fadens 103 auf der Aufnahme 105 abgewandten Richtung geringer ist. Auf diese Art und Weise rollt der Faden 103 während des Betriebes des Mährotors 100 ab. Vorteilhafter Weise ist die Abrollung auf wenige Zentimeter pro Minute begrenzt, genau die erforderlichen Menge, die während des Betriebes verbraucht/verschlissen wird.

Auf diese Weise wird der Faden kontinuierlich abgerollt. Vorteilhafter Weise dreht sich das Gehäuse mit 180.000 Umdrehungen pro Stunde und die Aufnahme tätig mit 180.000 Umdrehungen pro Stunde + von 1 bis 10 Umdrehungen pro Stunde.

Auf diese Weise wird der Faden mit von 1 bis 10 Umdrehungen pro Stunde abgewickelt.

In einer vorteilhaften Ausführungsform kann durch die Regelung der Geschwindigkeit der einzelnen Teile d.h. Aufnahme 105 und Gehäuse 101 kann die Abwickelgeschwindigkeit des Fadens während des Mähprozesses geregelt werden z.B. über die Übersetzung des Getriebes oder über die Antriebe dadurch kann die Abwickelgeschwindigkeit des Fadens während des Mähens geändert werden kann.

Der verwendete Faden 103 ist ein Kunststofffaden.

Vorteilhafter Weise treibt der Antrieb 5 einen Riemen 8 an, der seinerseits zwei Mährotoren 100 antreibt. Die Bewegung des Riemens wird über ein Getriebe übertragen, das den Geschwindigkeitsunterschied zwischen dem Gehäuse 101 und der Aufnahme 105 einstellt. Die Aufnahme 101 wird durch ein Zahnrad angetrieben, das mit dem angetriebenen Getriebe durch den Riemen 8 verbunden ist. Bevorzugter Weise ist die Aufnahme 105 mit einer Welle 107 verbunden, die mit der Aufnahme 105 bevorzugter Weise durch eine trennbare und/oder lösbare Verbindung zum Beispiel mit Verschraubung oder ähnlichem fest verbunden ist.

Die Welle 107 wird bevorzugter Weise von einem Zahnrad angetrieben, das mit dem angetriebenen Getriebe durch den Riemen 8verbunden ist. Auf diese Weise ist die Aufnahme 105 innerhalb des Gehäuses 101 lösbar und einführbar. Das Gehäuse 101 kann durch einen Deckel am Boden geschlossen oder in Richtung des Bodens geöffnet werden um so einen erleichterten Austausch der Aufnahme 105 zu erlauben, wobei die Aufnahme 105 in diesem Fall den Boden des Gehäuses 101 bildet.

Vorteilhafter Weise kann die Aufnahme 105 als Nachladung für den erfindungsgemäßen Mährotor 100 vertrieben werden.

Auf diese Art und Weise kann das Nachladen rasch und genau erfolgen, wobei ein vorgegebenes Abrollen sichergestellt wird, da die Fadenaufrollung des Kunststofffadens 103 unter Überwachung erfolgte.

In einer bevorzugten Ausführungsform ist außerhalb des Gehäuses 101 der Rotor und/oder mit dem Gerät eine Schneidvorrichtung 106 verbunden. Diese Schneidvorrichtung 106 ist bevorzugter Weise auf dem Gerät 1 angeordnet und legt zwischen zwei erfindungsgemäßen Mährotoren 100. Auf diese Weise wird die Länge des Fadens 103 eingestellt. Sobald der Faden durch das kontinuierliche Abrollen eine vorgegebene Länge übersteigt, trifft er während der Drehung auf die Schneidvorrichtung 106. Auf diese Weise wird der Faden 103 durch ein Schneidelement zum Beispiel ein oder mehrere in der Schneidvorrichtung 106 angeordnete Messer abgeschnitten. Vorteilhafter Weise ist die Schneidvorrichtung 106 der Art ausgebildet, dass der abgeschnittene Faden 103 in einem Behälter gesammelt wird.

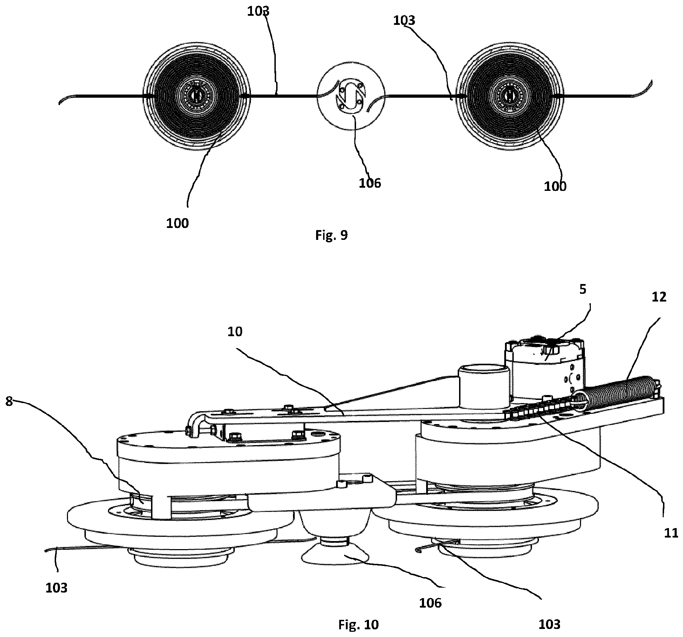

In Figur 9 ist die Schneidvorrichtung 106 in einer bevorzugten Ausführungsform dargestellt. In dieser Vorrichtung sind zwei Messer 106a mit U-förmigem Querschnitt angeordnet, in welchem die Öffnung des U gegen die Drehrichtung des Fadens 103 ausgerichtet ist. Bevorzugter Weise umfasst die Schneidvorrichtung 106 Saugmittel. Auf diese Weise wird der gesamte abgeschnittene Faden angesaugt und gesammelt, da wegen der kleinen Abmessung mit der Geschwindigkeit des Fadens und aufgrund der kleinen Abmessungen der geschnittenen Fadenteile eine Ablenkung und daher eine Umweltbelastung zu befürchten ist. Mit einer in der oder in der Nähe der Schneidvorrichtung angeordneten Saugvorrichtung werden die gesamten und/oder der größte Teil der Fadenteile gesammelt.

Auf einfache Weise kann in der Nähe der Schneidvorrichtung auf einfacher Weise ein Saugrohr angeordnet sein.

Bevorzugter Weise sind zwei durch einen einzigen Antrieb 5 angetriebene Mährotoren 100 bevorzugter Weise um eine im Wesentlichen zur Drehachse des Mährotors 100 parallelen Achse drehbar miteinander verbunden. Die Verbindung kann über einen Arm 10 erfolgen. Zur Steuerung der Position kann zwischen dem ersten Mährotor 100 und der zweiten Mährotor 101 Steuerkolben 110 angeordnet sein, der die Position zwischen den beiden Mährotoren 100 einstellt.

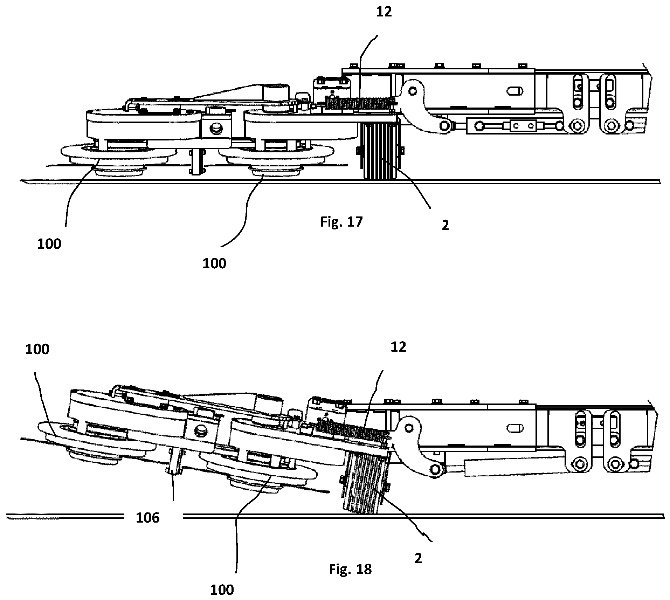

In Figur 17 und 18 wird eine bevorzugte Ausführungsform der Erfindung gezeigt, aus der ersichtlich ist, dass die Höhe der Räder 2 einstellbar und/oder gegenüber dem Gelände neigbar ist. Auf diese Art und Weise kann die Schnitthöhe eingestellt werden und/oder das erfindungsgemäße Gerät kann auch verwendet werden um eine Schnitt auf geneigtem Gelände auszuführen.

In einer bevorzugten Ausführungsform kann die Verbindung zwischen dem ersten und zweiten Rotor 100 mittels einer Feder 12 und einer Kette geregelt werden. Auf diese Weise zieht sich der zweite Rotor bei Aufschlagen auf einem Gegenstand zurück und dann kehrt dieser nach Überwindung des Hindernisses in Position zurück. Dieses System kann auch mit einem Steuerkolben 110 kombiniert werden.

### Legende der Bezugsziffern

- 1: Gerät
- 2: Räder
- 3: Verbindungsstelle
- 4: Rahmen
- 5: Antrieb
- 6: Kolbensystem
- 7: Gelenke
- 8: Riemen
- 10: Arm
- 12: Feder
- 100: Mährotor
- 101: Gehäuse
- 102: Öffnung
- 103: Faden
- 105: Aufnahme
- 106: Gleitvorrichtungen
- 107: Welle
- 110: Steuerkolben

## Patentansprüche

1. Fadenmährotor (100), gebildet durch eine Aufnahme (105), auf der mindestens ein Kunststofffaden (103) aufgewickelt ist, wobei die Aufnahme in einem Gehäuse (101) drehbar aufgenommen ist und die Aufnahme (105) und das Gehäuse (101) um eine einzige Achse herum drehbar sind, wobei das Gehäuse (101) mindestens eine Öffnungen aufweist, durch die ein Fadenabschnitt (103) nach außen geführt wird, **dadurch gekennzeichnet, dass** sich die Aufnahme (105) und mindestens ein das die Öffnung aufweisende Gehäuse bildendes Teil mit unterschiedlicher Geschwindigkeit angetrieben werden und mit unterschiedlichen Geschwindigkeit drehen und sich die Aufnahme mit einer Geschwindigkeit dreht, die größer ist als jene des die Öffnung (102) aufweisenden Teil des Gehäuses (101) in einer zur Aufwickelrichtung des Fadens abgewandten Richtung auf der Aufnahme (105).

2. Fadenmährotor (100) nach Anspruch 1, **dadurch gekennzeichnet, dass** das die beiden Teile durch einen einzigen Antrieb, jedoch unter Zwischenschaltung eines Getriebes angetrieben werden.

3. Fadenmährotor (100) nach einem der vorstehenden Ansprüche, **dadurch gekennzeichnet, dass** das Gehäuse (101) einen im wesentlichen kreisförmigen Querschnitt und mindestens zwei voneinander im wesentlichen abgewandte Öffnungen aufweist und dass mindestens zwei Fadenabschnitte über die Öffnungen (102) bzw. ein Fadenabschnitt (103) pro Öffnung geführt sind.

4. Fadenmährotor (100) nach einem der vorstehenden Ansprüche, **dadurch gekennzeichnet, dass** sich das Gehäuse (101), das die Öffnung aufweist, durch die der Fadenabschnitt geführt ist, sich mit 180.000 Umdrehungen in der Stunde und die Aufnahme sich mit 180.000 Umdrehungen in der Stunde (+) 1 bis 10 Umdrehungen in der Stunde dreht.

5. Fadenmährotor (100) nach einem der vorstehenden Ansprüche, **dadurch gekennzeichnet, dass** die Abwickelgeschwindigkeit des Fadens während des Mähens geändert werden kann.

6. Mähgerät welches durch eine Maschine gezogen wird, umfassend mindestens zwei Mährotoren (100) nach einem der vorstehenden Ansprüche.

7. Mähgerät nach Anspruch 6, **dadurch gekennzeichnet, dass** es mindestens zwei Mährotoren für jede Seite der Maschine umfasst.

8. Mähgerät nach Anspruch 6 oder 7, **dadurch gekennzeichnet, dass** das Mähgerät in der Breite einstellbar ist.

9. Mähgerät nach Anspruch 6, 7 oder 8, **dadurch gekennzeichnet, dass** es eine Schneidvorrichtung (106) für den Fadens (103) umfasst.

10. Mähgerät nach Anspruch 9, **dadurch gekennzeichnet, dass** die Schneidvorrichtung (106) zwischen zwei Mährotoren (100) liegt und dass die Schneidvorrichtung eine Saug-/Sammelvorrichtung umfasst.

## Claims

1. A trimmer mower rotor (100) formed by a holder (105) on which at least one plastic thread (103) is wound, wherein the holder is rotatably mounted in a housing (101) and the holder (105) and the housing (101) are rotatable about a single axis, the housing (101) having at least one opening through which a section of thread (103) is guided to the outside, **characterized in that** the holder (105) and at least one part forming the housing having the opening are driven at different speeds and rotate at different speeds, and the receptacle rotates at a speed greater than that of the part of the housing (101) having the opening (102) in a direction away from the winding direction of the thread on the receptacle (105).

2. A trimmer mower rotor according to claim 1, **characterized in that** the two parts are driven by a single drive, but with a gearbox interposed.

3. A trimmer mower rotor (100) according to one of the preceding claims, **characterized in that** the housing (101) has a substantially circular cross-section and at least two openings substantially facing away from each other, and **in that** at least two thread sections are guided through the openings (102) or one thread section (103) per opening.

4. A trimmer mower rotor (100) according to one of the preceding claims, **characterized in that** the housing (101) having the opening through which the thread section is guided rotates at 180,000 revolutions per hour and the receptacle rotates at 180,000 revolutions per hour (+) 1 to 10 revolutions per hour.

5. A trimmer mower rotor (100) according to any of the preceding claims, **characterized in that** the unwinding speed of the string can be changed during mowing.

6. Mowing device pulled by a machine, comprising at least two mowing rotors (100) according to one of the preceding claims.

7. Mowing device according to claim 6, **characterized in that** it comprises at least two mowing rotors for each side of the machine.

8. Mowing device according to claim 6 or 7, **characterized in that** the mowing device is adjustable in width.

9. Mowing device according to claim 6, 7, or 8, **characterized in that** it comprises a cutting device (106) for the thread (103).

10. Mower according to claim 9, **characterized in that** the cutting device (106) is located between two mowing rotors (100) and that the cutting device comprises a suction/collection device.

## Revendications

1. Rotor de tondeuse à fil (100) formé par un support (105) sur lequel est enroulé au moins un fil en plastique (103), le support étant logé de manière rotative dans un boîtier (101) et le support (105) et le boîtier (101) pouvant tourner autour d'un seul axe, le boîtier (101) présentant au moins une ouverture à travers laquelle une section de fil (103) est guidée vers l'extérieur, **caractérisé en ce que** le support (105) et au moins une partie formant le boîtier présentant l'ouverture sont entraînés à des vitesses différentes et tournent à des vitesses différentes, et le réceptacle tourne à une vitesse supérieure à celle de la partie du boîtier (101) présentant l'ouverture (102) dans une direction opposée à la direction d'enroulement du fil sur le réceptacle (105) .

2. Rotor de tondeuse à fil (100) selon la revendication 1, **caractérisé en ce que** les deux pièces sont entraînées par un seul entraînement, mais avec l'interposition d'un engrenage.

3. Rotor de tondeuse à fil (100) selon l'une des revendications précédentes, **caractérisé en ce que** le boîtier (101) présente une section transversale essentiellement circulaire et au moins deux ouvertures essentiellement opposées l'une à l'autre, et **en ce qu'**au moins deux sections de fil sont guidées à travers les ouvertures (102) ou une section de fil (103) par ouverture.

4. Rotor de tondeuse à fil (100) selon l'une des revendications précédentes, **caractérisé en ce que** le boîtier (101) qui comporte l'ouverture à travers laquelle passe la section de fil tourne à 180 000 tours par heure et le réceptacle tourne à 180 000 tours par heure (+) 1 à 10 tours par heure.

5. Rotor de tondeuse à fil (100) selon l'une des revendications précédentes, **caractérisé en ce que** la vitesse de déroulement du fil peut être modifiée pendant la tonte.

6. Faucheuse selon par une machine, comprenant au moins deux rotors de fauchage (100) selon l'une des revendications précédentes.

7. Faucheuse selon la revendication 6, **caractérisée en ce qu'**elle comprend au moins deux rotors de fauchage pour chaque côté de la machine.

8. Faucheuse selon la revendication 6 ou 7, **caractérisée en ce que** la faucheuse est réglable en largeur.

9. Faucheuse selon la revendication 6, 7 ou 8, **caractérisée en ce qu'**elle comprend un dispositif de coupe (106) pour le fil (103).

10. Faucheuse selon la revendication 9, **caractérisée en ce que** le dispositif de coupe (106) est situé entre deux rotors de coupe (100) et **en ce que** le dispositif de coupe comprend un dispositif d'aspiration/collecte.
